# EUROPEAN PATENT SPECIFICATION

(11) **EP 2 321 133 B1**
(45) Date of publication and mention of the grant of the patent: **27.06.2012**
(21) Application number: 09787639.5
(22) Date of filing: 05.02.2009
(51) Int. Cl.: B60J 7/06

(54) **DRIVING SYSTEM FOR PACKING AND/OR UNPACKING A CANVAS**
ANTRIEBSSYSTEM ZUM ZUSAMMENPACKEN UND/ODER AUSBREITEN EINER PLANE
SYSTÈME DE COMMANDE POUR TASSER ET/OU ÉTALER UNE BÂCHE

(30) Priority: 03.09.2008 EP 08425587
(43) Date of publication of application: 18.05.2011
(73) Proprietor: Marcolin S.r.l., 33170 Pordenone (IT)
(72) Inventor: AMATO, Davide, I-33080 Fiume Veneto Pordenone (IT)
(74) Representative: Citron, Massimiliano
(86) International application number: PCT/IT2009/000037
(87) International publication number: WO 2010/026608

(56) References cited:
- EP-A- 1 093 949
- US-A- 2 496 437
- US-A- 2 807 499

## Description

The invention refers to a driving system according to the preamble of claim 1, to pack and/or spread out the covering canvas of an open-top top-body, like for instance a top body of heavy vehicles, or of a body laid on the ground for collecting left-over or rejects. Such a system is known from US 2496437.

On the top-bodies of vehicles a bellow-foldable covering canvas is commonly mounted, distributed on and supported by centerings able to slide on the edge of the top-body.

The centerings are moved by two cable rings, arranged on the two sides of the top-body, tensioned between four pulleys, two of which - one by side - are connected by a shaft and set in rotation by an electric motor. The feet of the head centering are respectively fixed to a segment of cable belonging to each ring; the other centerings only slide above the cables and use them as a guide. When the motor is active it sets in motion the cable rings with equiverse directions and they draw back and forth the centerings, pushed or drawn by the head centering; e.g. see EP 1 093 949, or WO 2007124787 for a system based on cable rings on three sides of the top-body.

A problem of these systems is surely the complexity. The motor and relative gearmotor, and the control unit are very expensive and they ask for a lot of hours of specialized manpower for the assemblage on the top-body. Also, the mechanical components form a system that for all its working life needs maintenance.

US 2 807 499 describes a power-operated body top wherein centerings carrying a canvas are drawn on a top-body by the action of compressed air pushing inside pockets formed in the canvas.

US 2 496 437 discloses another power-operated body top wherein a canvas is folded or extended thereon by means of two telescopic tubes - one mounted under the canvas, the other under a load plane - able to extend through injection of compressed air and to draw the canvas.

EP 1 093 949 discloses a self-contained, manually crank-operated mechanism for drawing centerings supporting a canvas.

Object of the invention is to carry out a motion driving system very simple to produce, and easily mountable on a top-body.

Such an object is achieved by a driving system as claimed in Claim 1.

It is apparent how every problem stemming from the cable rings driving is eliminated. To move the canvas from the packed configuration to the unfolded one or viceversa two distinct fluid circuits/systems can be used, the first destined to one variation of configuration, the other to the inverse one. Clearly, by means of the fluid, a force may be exerted on one or more centerings, on the canvas or both. Alternatively, a unique circuit/system may be used adapted to move the canvas and the centerings between the packed position and the maximally extended position.

The system may comprise a high-pressure source of fluid and a network of ducts adapted to carry the fluid in pressure from the source towards one or more thrust-surfaces on which the pressure thereof is discharged, thereby exerting a thrust/traction on the canvas and/or one or more centerings.

In order to assure a practically unlimited autonomy, the system comprises a stocking reservoir for the fluid and a duct to draw the fluid from the reservoir. Preferably said fluid is compressed air, advantageously taken from the stocking reservoir commonly present on lorries or heavy vehicles, but it may be a liquid as well.

The system entails that one or more feet of the centerings are attached to the thrust surface through a dragging system or connections adapted to transmit or communicate to the centerings said force for moving them back and forth over the top-body. This allows localizing the action of the fluid in pressure at a point away from the centerings, with greater degrees of design freedom.

In an advantageous variant, wherein the fluid in pressure is directed on a movable surface to generate a linear thrust and then the displacement of the movable surface generated by said thrust is transmitted to one or more centerings and/or the canvas, the system comprises a tubular guiding element which is hollow inside, and a plunger or piston slidingly and tightly mounted inside the tubular element which acts as a thrust-surface for the fluid in pressure, the dragging system being connected to the piston or plunger.

The displacement of the piston or plunger translates into a displacement for one or more centerings.

Preferably, the dragging system comprises a flexible element, preferably a cable or a cable ring, connected to one or more feet of the centerings. Therefore a preexistent cable ring system can be exploited, and operated by the fluid in pressure. This allows incorporating the invention in known systems.

As preferred variants:
- there is arranged on one side of the top-body only one flexible element, having its ends inserted in the opposing openings of the tubular element and connected to the plunger; - fluid-tight means are applied to the tubular element so as to allow the entry and/or the coming out of fluid from the tubular element and the sliding of the flexible element without fluid leakages;
- the tubular element is mounted inside an interspace present between the walls forming the side of the top-body; thereby compacting the system;
- there are used connecting means adapted to enable the segmentation of the flexible element, so as to be able to replace only a partial length thereof, and/or connecting means adapted to enable the segmentation of the tubular element, to adapt it to different top-bodies;
- there are used position sensors for one or more centerings and/or the piston or plunger, and control means adapted to regulate the flow of fluid in pressure as a function of the output of the sensors.

One can exploit the fluid in several ways, e.g. to generate a driving torque, and converting said driving torque into a linear thrust to be applied to one or more centerings and/or the canvas; or by directing the fluid in pressure on a movable surface to generate a linear thrust.

Such a movable surface may be a surface belonging to one or more centerings and/or the canvas, or not. In the second case, with fewer design constraints, the displacement generated by the movable surface is transmitted to one or more centerings and/or the canvas.

The fluid used is preferably compressed air.

The invention and its advantages will be even more clearer from the following description of a preferred embodiment, together with the attached drawings in which
figure 1 shows a lateral view of a vehicle with a top-body mounting a system of the invention;
figure 2 shows a partial three-dimensional view of a component in the system in fig. 2;
figure 3 shows in cross-section the inside of a side-board of a top-body.

It is to be noted that the complicated cable rings of the known art are not used, an electric motor and relative control unit either. Everything exploits the pressure of a fluid, which is compressed in real time or pre-compressed and stored.

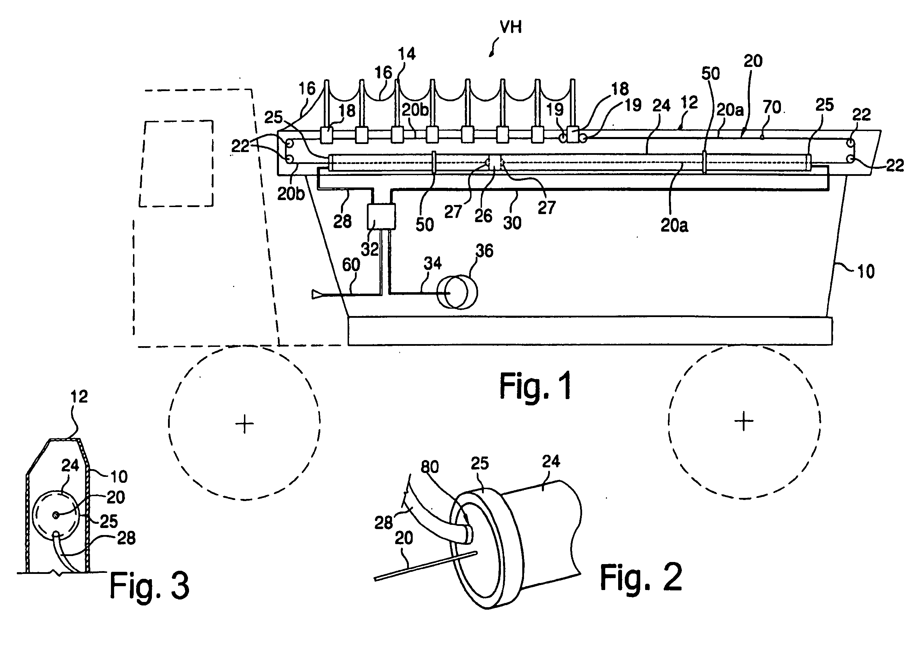

An improvement of the above system consists of exploiting the fluid in pressure both for extending and for packing the canvas. See figures 3 to 5.

A heavy vehicle VH is equipped with a top-body 10 having an upper edge 12 on which centerings 14 can slide forward and back supporting a covering canvas 16. Each side of the centerings ends with a skid 18 which facilitates the sliding on the edge 12. Only some elements are referenced, for simplicity.

On the side of the top-body 10 are mounted four idle pulleys 22, placed about like the vertices of a rectangle, on which can slide deviated a ring of cable 20. This cable ring 20 is divided into two segments 20a, 20b each having one end attached to opposite sides of the skid 18 of the head centering (see fastening points 19), while the other end of each is attached to opposite sides of a piston 26 (see fastening points 27) slidably contained in a hollow cylinder 24. The other centerings may use the cable as a guide only.

The cylinder 24 is mounted horizontally on the top-body 10, just below the edge 12, and has a length almost equal to the latter. At the ends of the cylinder 24 are fitted lids or caps 25, bored at the center to be passed-through tightly by the segments of cable 20a, 20b and bored at the margin (see opening 80 in Fig. 2) to allow the connection with two conduits 28, 30. Also the piston 26 has adequate dimensions and tightness to slide in the cylinder 24 without or with minimal leakage of fluid. Note that the cylinder 24 helps to form two chambers, beside the piston 26, in which the fluid in pressure may be injected. The piston 26 forms a wall of each chamber, in common.

The conduits 28, 30, for example flexible tubes, are used to transport some fluid, here compressed air, to and from a distribution box 32 supplied through a conduit 34 by a compressor 36, always present on the vehicle VH, or by an equivalent reserve of fluid under pressure. In the box 32 is arranged a series of solenoid valves or manually-operated valves, which allow to send the compressed air coming from the compressor 36 in one of the conduits 28, 30 and to disperse in the environment that coming out from the other. If the fluid were e.g. oil, it is good to provide a recycling and/or recovering system, to avoid polluting the environment.

To stretch or pack the canvas 16 is therefore sufficient to operate said valves, either manually or through a simple separate control unit or a remote control. By sending e.g. compressed air in the duct 28, it will push the piston 26 to the right in the figure, enlarging the left chamber and decreasing the right one. The piston 26, thanks to its operative connection with the centerings 14, drags them through the segment 20b, and it places them closer whereby closing the canvas 16. If the compressed air is pushed in the conduit 30, instead, the movements reverse and the canvas 16 gets extended.

The box 32 can advantageously be equipped with an auxiliary input 60 for the fluid in pressure. If the compressor or reserve 36 were exhaust, one could feed the system with an external alternative or emergency source, including e.g. a hand pump. In any case, the canvas 16 is not involved in the malfunction and the vehicle VH can operate nevertheless.

The section of the cylinder 24 and the thrust-surface of the piston 26 are selected on the basis of the weights to move. Given a certain amount of available fluid pressure, the force exerted on and by the cable 20 is proportional to the effective surface of the piston 26. According to the application, one should choose an appropriate size. Normally a compressor truck can output pressures up to 8 atm. As the necessary pressure on the piston 26 has been shown by experimental tests to be about 40-50N, the size of the components remain definitely small and the losses in the caps 25 and/or in the seals of the piston 26 are negligible.

To avoid a laborious replacement if the cable 20 were to break or wear, mostly on the exposed part outside the cylinder 24, it is preferable to further segment the segments 20a, 20b in smaller cable sections, through e.g. small quick hook-ups 70. Then, only the section to be replaced can be removed without disassembling the rest of the system .

To easily adapt the system to any size of top-body and make it modular, it is convenient to segment the cylinder 24, through e.g. joint means like threaded fittings 50 or threaded ends to be screwed one over the other. It suffices then to connect an appropriate number of segments to obtain a cylinder of the correct length.

The cylinder 24 may be mounted on the top-body 10 in the position best suited to the application, being enough to transmit the cable 20 with idle pulleys. An advantageous position is inside the top-body 10 (Fig. 3), usually made of bent sheet-metal with an empty space inside. A pair of support brackets (not shown) are sufficient to fix the cylinder 24 therein. The additional benefit is to protect the cylinder 24 and to alter at the least the structure of the top-body 10.

A system according to the invention may be equipped with a position control for the canvas, so as to be able to precisely set a desired position for the canvas. To this aim one may mount e.g. a potentiometer on a pulley 22 to monitor the number of turns thereof.

The fluid in pressure may be used in a variant to operate the impeller or blades of a turbine. In Fig. 3 the cylinder 24 is removed while the pulley 22 and the cable ring 20 are retained. A pulley 22 is keyed onto the turbine shaft, and its rotation moves the cable 20 and thus the centerings 14. Note that the moving devices formed by the cylinder 24 and the piston 26 constitute a linear guide-cursor or carriage. In the example above it is driven by a fluid in pressure, but one could replace it with a linear guide and a carriage sliding in it and electrically powered.

## Claims

1. Driving System for moving the covering canvas (16) of a top-bod (10) between a first and a second configuration, packed or extended, the canvas being sustained by centerings (14) with feet able to slide on an upper edge (12) of the top-body, the system comprising a network of ducts (28, 30) adapted to carry a fluid in pressure from a source toward one or more thrust-surfaces (26) on which the pressure thereof is discharged, thereby exerting a trust or traction on one or more centerings so as to spread them out and/or to pack them,
**characterized in that**
one or more feet of the centerings (14) are attached to said one or more thrust-surfaces through a dragging system adapted to transmit to the centerings said trust or traction for moving them back and forth over the top-body.

2. System according to claim 1, comprising a tubular guiding element which is hollow inside, and a plunger or piston (26) slidingly and tightly mounted inside the tubular element which acts as a thrust-surface for the fluid in pressure, the dragging system being connected to the piston or the plunger.

3. System according to claim 1 or 2, wherein the dragging system comprises a flexible element connected to one or more feet of the centerings.

4. System according to claim 2 and 3, wherein on one side of the top-body there is only one flexible element, which has its ends (i) inserted in opposing openings of the tubular element and (ii) connected to the plunger.

5. System according to claim 2 and one of the claims 3 or 4, comprising fluid-tight means applied to the tubular element adapted to allow the entry and/or the coming out of fluid from the tubular element and the sliding of the flexible element without fluid leakages.

6. System according to claim 2 and optionally one of claims 3 to 5, wherein the tubular element is mounted inside an interspace present between the walls forming the side of the top-body.

7. System according to claim 2 and optionally one of claims 3 to 5, wherein the tubular element is mounted horizontally on the top-body (10), just below its edge (12), and has a length almost equal to the latter.

8. System according to one of claims 3 to 6, comprising connecting means adapted to enable the segmentation of the flexible element.

9. System according to claim 2 and optionally one of claims 3 to 7, comprising connecting means adapted to enable the segmentation of the tubular element.

10. System according to claim 2 and optionally one of claims 3 to 8, comprising two conduits (28, 30) of fluid for running fluid in and collecting fluid from two opposite points of the tubular element, the conduits being connected to flow diverting means which are supplied by a reservoir of fluid in pressure.

11. System according to claim 10, wherein the conduits (28, 30) are used to transport fluid to and from a distribution box (32) supplied through a conduit (34) by a compressor (36) present on a vehicle (VH) hosting the system or by an equivalent reserve of fluid under pressure.

12. System according to claim 11, wherein the box (32) is equipped with an auxiliary input (60) for the fluid in pressure for an external alternative source or emergency source.

13. System according to any of the preceding claims, wherein each side of the centerings ends with a skid (18) which facilitates the sliding on the edge (12).

14. System according to any one of the preceding claims 2 to 13, wherein the tubular guiding element is adapted to form two chambers, beside the plunger or piston, in which the fluid in pressure may be injected, the plunger or piston (26) forming a wall of each chamber, in common.

15. System according to any of the preceding claims, comprising position sensors for one or more centerings and/or the piston or plunger, and control means adapted to regulate the flow of fluid in pressure as a function of the output of the sensors.

## Patentansprüche

1. Antriebssystem zum Verschieben der verpackten oder ausgebreiteten Abdeckplane (16) einer Pritsche (10) von einer in die andere Position, wobei sie von Spriegeln (14) mit Füßen gestützt wird, die auf einem oberen Rand (12) der Pritsche gleiten, wo das System besteht aus einem Leitungssystem (28, 30), das ein Druckmedium von einer Quelle zu einer oder mehreren Schubflächen (26) leitet, auf denen der Druck entlastet und somit ein Schub bzw. Zug für die Ausbreitung und/oder Verpackung auf einen oder mehrere Spriegel erfolgt,
**dadurch gekennzeichnet, dass**
ein oder mehrere Füße der Spriegel (14) anhand eines Mitnahmesystems mit einer oder mehreren dieser Schubflächen verbunden sind, dadurch soll der Schub bzw. Zug für die Vor- und Zurückverschiebung der Spriegel an der Pritschenoberseite an die Spriegel übertragen werden.

2. System nach Anspruch 1, bestehend aus einem innen hohlem Rohrführungssystem und einem Stößel bzw. Kolben (26), der verschiebbar und dicht im Rohrelement eingebaut ist, welches als Druckfläche für das Druckmedium auf den Kolben bzw. Stößel einwirkt, der mit dem Mitnahmesystem verbunden ist.

3. System nach Anspruch 1 oder 2, in dem das Mitnahmesystem aus einem flexiblen Element besteht, das mit einem oder mehreren Füßen der Spriegel verbunden ist.

4. System nach Anspruch 2 und 3, in dem an einer Seite der Pritsche ein flexibles Element vorhanden ist, dessen Enden (i) in den gegenüber liegenden Öffnungen des Rohrelements stecken und (ii) mit dem Kolben verbunden sind.

5. System nach Anspruch 2 und nach einem der Ansprüche 3 oder 4, bestehend aus fluiddichten Vorrichtungen, die am Rohrelement befestigt sind, für den Ein- und/oder Austritt des Mediums aus dem Rohrelement und die Verschiebung des flexiblen Elements ohne Mediumaustritte ermöglichen.

6. System nach Anspruch 2 und optional nach einem der Ansprüche 3 bis 5, in dem das Rohrelement hinter einem Hohlraum zwischen den Wänden eingebracht ist, welche die Seite der Pritsche bilden.

7. System nach Anspruch 2 und optional nach einem der Ansprüche 3 bis 5, in dem das Rohrelement horizontal auf der Pritsche (10), d.h. knapp unter der Pritschenwand (12), montiert ist und ungefähr die gleich Länge wie die Pritschenwand aufweist.

8. System nach einem der Ansprüche 3 bis 6, bestehend aus Verbindungsvorrichtungen zur Segmentierung des flexiblen Elements.

9. System nach Anspruch 2 und optional nach einem der Ansprüche 3 bis 7, bestehend aus Verbindungsvorrichtungen zur Segmentierung des Rohrelements.

10. System nach Anspruch 2 und optional nach einem der Ansprüche 3 bis 8, bestehend aus zwei Mediumleitungen (28, 30) für die Zufuhr des Mediums und dessen Entnahme aus zwei entgegen gesetzten Punkten des Rohrelements, wobei diese Leitungenmittels Deflektoren, die von einem Druckmediumbehälter gespeist werden, angeschlossen sind.

11. System nach Anspruch 10, in dem die Leitungen (28, 30) für die Beförderung eines Mediums von und zu einem Verteilerkasten (32) benutzt werden, der über eine Leitung (34) von einem Verdichter (36) auf einem Fahrzeug (VH) versorgt wird, der das System oder eine gleichwertige Druckmedium-Reserve enthält.

12. System nach Anspruch 11, in dem der Kasten (32) mit einem Hilfseingang (60) für das Druckmedium ausgestattet ist, der als externe Alternativ- oder Notquelle dient.

13. System nach einem der vorhergehenden Ansprüche, in dem jede Seite der Spriegel mit einem Gleitschuh (18) endet, der den Gleitvorgang auf der Pritschenwand (12) erleichtert.

14. System nach einem der Ansprüche 2 bis 13, in dem das Rohrelement zwei Kammern seitlich des Kolbens bzw. Stößels bildet, in welche das Druckmedium eingespritzt wird, wobei der Kolben bzw. Stößel (26) eine gemeinsame Wand in jeder Kammer bildet.

15. System nach einem die vorhergehenden Ansprüche, bestehend aus Abfragesensoren für einen oder mehrere Spriegel und/oder den Kolben bzw. Stößel und aus Kontrollvorrichtungen zur Durchflussregelung des Druckmedium je nach dem Ausgang der Sensoren.

## Revendications

1. Système d'actionnement pour déplacer la bâche (16) servant à couvrir un caisson (10) d'une première à une seconde configuration, repliée sur elle-même ou déployée, la bâche étant supportée par des arceaux (14) à pieds coulissants sur un bord supérieur (12) du caisson, le système comprenant un réseau de conduits (28, 30) à même d'acheminer un fluide sous pression d'une source vers une ou plusieurs surfaces de poussée (26), sur lesquelles décharger la pression et exercer de la sorte une poussée ou une traction sur un ou plusieurs arceaux de façon à les déployer et/ou à les regrouper.
**caractérisé en ce que** un ou plusieurs de ces arceaux (14) sont reliés à une ou plusieurs des dites surfaces de poussée par un système d'entraînement apte à transmettre aux arceaux ladite poussée ou traction pour les déplacer vers l'avant et vers l'arrière sur le caisson.

2. Système selon la revendication 1, comprenant un élément tubulaire de guidage, dont l'intérieur est creux, et un piston (26) coulissant et étanche, monté à l'intérieur de l'élément tubulaire qui agit comme une surface de poussée pour le fluide sous pression, le système d'entraînement étant relié au piston.

3. Système selon la revendication 1 ou 2, dans lequel le système d'entraînement comprend un élément flexible relié à un ou plusieurs pieds des arceaux.

4. Système selon les revendications 2 et 3, dans lequel un côté du caisson porte un seul élément flexible, dont les extrémités sont (i) enfilées dans les ouvertures opposées de l'élément tubulaire et (ii) reliées au piston.

5. Système selon la revendication 2 et l'une des revendications 3 ou 4, comprenant des dispositifs étanches au fluide appliqués sur l'élément tubulaire, à même de permettre l'entrée et/ou la sortie de fluide de l'élément tubulaire et le coulissement de l'élément flexible sans aucune fuite de fluide.

6. Système selon la revendication 2 et, en option, une des revendications de 3 à 5, dans lequel l'élément tubulaire est monté dans un interstice situé entre les parois formant un côté du caisson.

7. Système selon la revendication 2 et, en option, une des revendications de 3 à 5, dans lequel l'élément tubulaire est monté horizontalement sur le caisson (10), immédiatement sous la ridelle (12), et a une longueur environ égale à ce dernier.

8. Système selon une des revendications de 3 à 6, comprenant des pièces de connexion aptes à permettre la segmentation de l'élément flexible.

9. Système selon la revendication 2 et, en option, une des revendications de 3 à 7, comprenant des pièces de connexion aptes à permettre la segmentation de l'élément tubulaire.

10. Système selon la revendication 2 et, en option, une des revendications de 3 à 8, comprenant deux conduits de fluide (28, 30) pour introduire du fluide et recueillir du fluide de deux points opposés de l'élément tubulaire, les conduits étant reliés à des dispositifs de déviation du débit, qui sont alimentés par un réservoir de fluide sous pression.

11. Système selon la revendication 10, dans lequel les conduits (28, 30) sont utilisés pour transporter du fluide de et vers une boîte de distribution (32), alimentée par un conduit (34) au moyen d'un compresseur (36) placé sur un véhicule (VH) abritant le système, ou par une réserve équivalente de fluide sous pression.

12. Système selon la revendication 11, dans lequel la boîte (32) est équipée d'une entrée auxiliaire (60) pour le fluide sous pression, d'une source extérieure alternative ou d'urgence.

13. Système selon n'importe laquelle des revendications précédentes, dans lequel chaque côté des arceaux se termine par un patin (18) facilitant le coulissement sur la ridelle (12).

14. Système selon l'une des revendications de 2 à 13, dans lequel l'élément tubulaire de guidage forme deux chambres, aux côtés du piston, dans lesquels injecter le fluide sous pression, le piston (26) formant une paroi commune à chaque chambre.

15. Système selon n'importe laquelle des revendications précédentes, comprenant des capteurs de position pour un ou plusieurs arceaux, et/ou le piston, et des dispositifs de contrôle aptes à réguler le débit de fluide sous pression en fonction de la sortie des capteurs.
